# EUROPÄISCHE PATENTSCHRIFT

(11) **EP 3 222 141 B1**
(45) Veröffentlichungstag und Bekanntmachung des Hinweises auf die Patenterteilung: **09.03.2022**
(21) Anmeldenummer: 17160246.9
(22) Anmeldetag: 10.03.2017
(51) Int. Cl.: A01G 13/02

(54) **VORRICHTUNG ZUR WACHSTUMSHILFE UND ZUM SCHUTZ EINZELNER TRIEBE AN BÄUMEN**
DEVICE FOR GROWTH ASSISTANCE AND FOR PROTECTING INDIVIDUAL SHOOTS ON TREES
DISPOSITIF D'AIDE À LA CROISSANCE ET DE PROTECTION DE RAMEAUX D'ARBRES

(30) Priorität: 21.03.2016 DE 102016105250
(43) Veröffentlichungstag der Anmeldung: 27.09.2017
(73) Patentinhaber: Staude, Wolfgang, 34513 Waldeck (DE)
(72) Erfinder: Staude, Wolfgang, 34513 Waldeck (DE)
(74) Vertreter: Sprenger, Gerrit Lars Eike

(56) Entgegenhaltungen:
- DE-B- 1 112 667
- DE-U1-202012 005 326
- US-A- 1 040 891

## Beschreibung

Die Erfindung betrifft eine Vorrichtung zur Wachstumshilfe und zum Schutz einzelner Triebe von Bäumen nach dem Oberbegriff des Patentanspruchs 1.

Eine derartige Vorrichtung ist beispielsweise aus der DE 20 2012 005 326 U1 bekannt. Bei der dortigen Vorrichtung handelt es sich um einen Vogelstab, der aus einer Klemmeinrichtung besteht, an welcher ein Stab angeordnet ist. Derartige Vogelstäbe schützen die Terminaltriebe von Bäumen effektiv gegen Vogelschäden. Die Stäbe werden an dem Terminaltrieb des vergangenen Jahres befestigt, sodass der neue Trieb ungehindert austreiben kann, ohne dass sich Vögel daraufsetzen oder ihn anderweitig beschädigen können. In erster Linie werden mit derartigen Vogelstäben die verschiedensten Arten von Nadelbäumen geschützt, die als Weihnachtsbäume vermarktet werden sollen. Bei diesen Bäumen wird nämlich vonseiten der Kundschaft auf guten und gleichmäßigen Wuchs Wert gelegt. Ein derartiger gleichmäßiger Wuchs kann nicht gewährleistet werden, wenn in verschiedenen Jahren die frischen Spitzen durch Vögel beschädigt wurden. Daraus resultiert nämlich im Folgejahr ein nicht gleichmäßiger Wuchs und dadurch eine nicht vermarktbare minderwertige Qualität des Nadelbaumes. Dies führt daher auch zu finanziellen Einbußen der Produzenten und Händler.

Der Vogelstab der DE 20 2012 005 326 U1 ist dabei als einteiliges Bauteil im Kunststoffspritzgussverfahren hergestellt, wobei die Klemmeinrichtung am unteren Ende des Stabes so konzipiert ist, dass mit drei parallel übereinander angeordneten Federstreifen eine Befestigungswirkung am Terminaltrieb des Baumes erreicht wird. Das obere und untere Kraftelement übt dabei Kraft von einer Seite auf den Terminaltrieb aus, während das mittlere Element eine Kraft von der anderen Seite auf den Terminaltrieb ausübt.

Eine zu der DE 20 2012 005 326 U1 ähnliche Vorrichtung istin der DE 11 12 667 B gezeigt, die drei Zinken zur Einklemmung eines Terminaltriebes eines Baumes aufweist. Zudem sind dort noch gebogene Metalldrähte zur Einklemmung eines Terminaltriebes eines Baumes offenbart.

Aus der US 1 04 891 A ist eine Vorrichtung mit einer U-förmigen Klammer zum Anordnen an einen Trieb eines Baumes mit einer daran angeordneten Spirale zur Führung dieses Triebes gezeigt.

Da es sich bei den Terminaltrieben und auch bei anderen frischen Trieben um noch nicht verhärtete Triebe handelt, wird durch die bekannte Klemmeinrichtung der DE 20 2012 005 326 U1 der Trieb, an dem der Vogelstab befestigt wird, durch die Krafteinwirkung der Klemmeinrichtung ebenfalls umgeformt, sodass auch bei diesem Vogelstab eine gleichmäßige Wachstumsrichtung beziehungsweise ein gleichmäßiges Wachstum nicht sichergestellt ist, sodass auch Bäume, die mit einem derartigen Vogelstab behandelt wurden, nicht optimal vermarktet werden können.

Es ist daher Aufgabe der Erfindung, eine Vorrichtung zur Wachstumshilfe und zum Schutz einzelner Triebe von Bäumen nach dem Oberbegriff des Patentanspruchs 1 derart weiterzubilden, dass durch die Krafteinwirkung der Klemmeinrichtung keinerlei nachteilige Auswirkungen auf das Wachstum der mit einer derartigen Vorrichtung versehenen Triebe eines Baumes auftreten.

Gelöst wird diese Aufgabe durch eine Vorrichtung zur Wachstumshilfe und zum Schutz einzelner Triebe von Bäumen mit allen Merkmalen des Patentanspruchs 1.

Vorteilhafte Ausgestaltungen der Erfindung finden sich in den Unteransprüchen.

Die erfindungsgemäße Vorrichtung zur Wachstumshilfe und zum Schutz einzelner Triebe von Bäumen weist eine Klemmeinrichtung auf, mit welcher die Vorrichtung an einem Baum befestigbar ist. Die Klemmeinrichtung weist dabei ein erstes Klemmelement auf, welches über einen elastischen biegbaren Steg mit einem zweiten Klemmelement verbunden ist, wobei die beiden Klemmelemente an gegenüberliegenden Enden des Steges angeordnet sind und das erste Klemmelement zwei Arme aufweist, die dazu ausgebildet sind, an einen Trieb eines Baumes an gegenüberliegenden Seiten des Triebes unter Aufbau einer Klemmwirkung anzugreifen sowie das zweite Klemmelement mit einem Bogen versehen ist, mit welchem ein durch das andere Klemmelement der Klemmeinrichtung eingespannter Trieb eines Baumes umgreifbar ist. Durch den Steg sind diese beiden Klemmelemente der Klemmeinrichtung über die gesamte Längserstreckung des Steges beabstandet, sodass die durch die einzelnen Klemmelemente auf den Trieb eines Baumes, an welchem die erfindungsgemäße Vorrichtung befestigt werden soll, wirkende Kraft minimiert und über eine größere Längserstreckung des Triebes verteilt wird. Hierdurch wird erreicht, dass in einzelnen Abschnitten des Triebes geringere Kräfte, insbesondere geringere Klemmkräfte durch die einzelnen Klemmelemente der Klemmeinrichtung auf den Trieb einwirken und somit das Wachstum des Triebes deutlich weniger beziehungsweise überhaupt nicht negativ beeinträchtigt wird. Hierdurch wird erreicht, dass die einzelnen Triebe der Bäume ein gleichmäßigeres Wachstum aufweisen und somit die für den Käufer eines Baumes notwendige Qualität durch das besonders gleichmäßige Wachstum gesteigert wird.

Dadurch, dass das erste Klemmelement mit zwei Armen ausgestattet ist, die dazu ausgebildet sind, an einem Trieb eines Baumes an gegenüberliegenden Seiten des Triebes unter Aufbau einer Klemmwirkung anzugreifen, ist in einfacher Weise ermöglicht, dass die Klemmeinrichtung mit dem ersten Klemmelement in einfacher Weise an dem Trieb angeordnet werden kann, wobei unter Biegung des Steges nachfolgend das zweite Klemmelement ebenfalls an dem Trieb angeordnet werden kann.

Besonders vorteilhaft ist, dass das zweite Klemmelement der Klemmeinrichtung mit einem Bogen versehen ist, mit welchem ein durch das andere Klemmelement der Klemmeinrichtung bereits eingespannter Trieb eines Baumes umgreifbar ist. Hierdurch ist eine sehr einfache Handhabung der erfindungsgemäßen Vorrichtung gewährleistet, da eine bereits mit einer Klemmrichtung an einem Trieb fixierte Vorrichtung endgültig positionierbar ist, indem einfach der Bogen der weiteren Klemmvorrichtung um den Trieb geführt wird. Durch die Elastizität der erfindungsgemäßen Vorrichtung wird somit auch bei dem Klemmelement mit einem Bogen eine entsprechende Klemmwirkung erzielt.

Dabei hat es sich bewährt, dass die erfindungsgemäße Vorrichtung aus einem witterungsbeständigen Kunststoff, insbesondere aus einem thermoplastischen Kunststoff und besonders bevorzugt Polyoxymethylen besteht. Thermoplastische Kunststoffe, insbesondere Polyoxymethylen, zeichnen sich besonders dadurch aus, dass sie eine hohe Steifigkeit und niedrige Reibwerte und ausgezeichnete Dimensionsstabilität und thermische Stabilität aufweisen. Insbesondere sind sie auch besonders witterungsbeständig und UV-beständig, sodass erfindungsgemäße Vorrichtungen aus derartigen Kunststoffen über mehrere Jahre ohne Beschädigungen zu erleiden wiederholt eingesetzt werden können.

Weiterhin von Vorteil ist es, dass erfindungsgemäße Vorrichtungen aus derartigen Kunststoffen in einfacher Weise als einteilige Vorrichtungen im Spritzgussverfahren hergestellt werden können. Derartige im Spritzgussverfahren hergestellte Vorrichtungen weisen auch eine entsprechende Elastizität auf, sodass sie vom Anwender auch einhändig an entsprechende Triebe von Bäumen angebracht werden können. Hierdurch ist die Zeit zum Anbringen der erfindungsgemäßen Vorrichtung deutlich minimiert, da die zweite Hand des Anwenders nicht benötigt wird und somit bereits anderweitig genutzt werden kann.

Nach einer weiteren vorteilhaften Ausgestaltung der Erfindung ist an dem zwischen den Klemmelementen befindlichen Steg ein Halteelement angeordnet. Vorzugsweise ist dieses Haltelement derart an dem Steg angeordnet, dass es sich in der Mitte der Längserstreckung der Klemmeinrichtung befindet. Hierdurch ist gewährleistet, dass die Vorrichtung in einfacher Weise derart an einem Trieb angebracht werden kann, dass sich eine Längsachse des Halteelementes nach der Anordnung der erfindungsgemäßen Vorrichtung auf einem Trieb parallel zur Längsachse dieses Triebes befindet, da sich die Klemmeinrichtung an dem Trieb entsprechend biegt und das Halteelement sich dabei im Maximum der Biegung befindet. Durch die Elastizität der aus dem thermoplastischen Kunststoff bestehenden Vorrichtung ist zudem gewährleistet, dass die Vorrichtung in einfacher Weise mit einer Hand an dem Trieb befestigt werden kann.

Nach einem weiteren Gedanken der Erfindung ist an dem Halteelement ein Stab angeordnet, dessen Längsachse parallel zur Längsachse der Klemmeinrichtung verläuft. Dies gilt sowohl in seiner Ausgangsstellung, in welcher der Steg noch nicht gebogen und die Klemmelemente noch nicht am Trieb angeordnet sind, als auch bei der Anordnung der erfindungsgemäßen Vorrichtung an dem Trieb, wobei sich das Halteelement im Maximum der Biegung des die Klemmelement verbindenden Steges befindet. Hierdurch ist gewährleistet, dass bei Verwendung der Vorrichtung als Vogelstab dieser Stab mit seiner Längsachse parallel zur Längsachse der Klemmeinrichtung und damit auch parallel zur Längsachse des Triebes, insbesondere des Terminaltriebes verläuft. Alternativ kann es natürlich auch vorgesehen sein, einen derartigen Stab direkt an dem Steg anzuordnen, mit dem die beiden Klemmelemente der Klemmeinrichtung verbunden sind. Auch hierdurch wird die entsprechende parallele Ausrichtung der Längsachsen des Stabes und der Längsachse des Triebes ermöglicht. In beiden Fällen ist auf jeden Fall gewährleistet, dass der Stab den Trieb schützt und dieser somit ungehindert austreiben kann, ohne dass sich Vögel auf diesen Trieb setzen können, da der Stab den austreibenden Trieb überragt.

Dabei hat es sich weiterhin als vorteilhaft erwiesen, dass sich der Stab in seiner Längserstreckung mit seinem einen Ende über eines der Klemmelemente der Klemmeinrichtung erstreckt. Durch diese Maßnahme wird sichergestellt, dass der Stab den Trieb, an dem die Vorrichtung angeordnet wird, auch überragt und somit ein gleichmäßiges Wachstum des Triebes gewährleistet. Durch den Stab ist der Trieb nämlich davor geschützt, dass sich Vögel auf ihn setzen oder auch anderweitig beschädigen.

Vorteilhafterweise ist dabei der Stab mit seinem anderen Ende an dem Halteelement angeordnet. Durch diese Ausgestaltung der Erfindung wird mit minimalem Einsatz von Kunststoff gearbeitet, sodass die erfindungsgemäße Vorrichtung wirtschaftlich effizient hergestellt werden kann, wobei natürlich durch die Ressourceneinsparung auch eine ökologisch sehr vorteilhafte Vorrichtung geschaffen wird.

Damit die Vorrichtung dabei sicher und dauerhaft an dem Trieb fixierbar ist, kann es vorgesehen sein, dass die Arme mit einer Mehrzahl von Zähnen versehen sind, die an dem Trieb angreifen können und damit ein Verschieben der Vorrichtung auf dem Trieb verhindern.

Weiterhin kann es vorteilhafterweise auch vorgesehen sein, dass ein Führungselement für einen Trieb eines Baumes vorgesehen ist, welches an dem Stab vorzugsweise aber nicht notwendigerweise lösbar angeordnet ist. Durch die Ausbildung eines derartigen Führungselementes ist nochmals sichergestellt, dass der Trieb in die gewünschte Richtung wächst, wenn er durch das Führungselement geführt wurde. Auch hierdurch wird das besonders gleichmäßige Wachstum des Baumes nochmals gefördert.

Abschließend kann es auch vorgesehen sein, dass das eine Klemmelement der Klemmeinrichtung gegenüber dem anderen Klemmelement und dem Steg um einen Winkel (∝) abgewinkelt ist, wobei dieser Winkel (∝) zwischen 15° und 45° beträgt. Eine derartige Ausführung der erfindungsgemäßen Vorrichtung ist insbesondere dann sinnvoll, wenn die erfindungsgemäße Vorrichtung nicht als Vogelstab, sondern als Zweigformer eingesetzt wird. Ein derartiger Zweigformer ermöglicht ein schnelles Fixieren von Zweigen beziehungsweise Trieben von Bäumen, wobei das Binden, Knoten oder Beschweren von Jungästen entfällt. Vorzugsweise werden dabei einjährige Triebe, die bereits ausgewachsen und fruchtbar, jedoch noch nicht verhärtet sind, heruntergebogen. Mit dem einen Klemmelement der Klemmeinrichtung wird dabei der Stamm des Baumes umfasst, während das andere Klemmelement der Klemmeinrichtung diesen einjährigen Trieb umfasst. Hierdurch wird eine Veränderung der Triebstellung erreicht, die zu einem früheren und höheren Ernteertrag, insbesondere bei Obstbäumen führt.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein erstes Ausführungsbeispiel einer erfindungsgemäßen Vorrichtung in einer Draufsicht,
- Figur 2:: ein zweites Ausführungsbeispiel einer erfindungsgemäßen Vorrichtung in einer Draufsicht,
- Figur 3:: ein drittes Ausführungsbeispiel einer erfindungsgemäßen Vorrichtung in einer Draufsicht,
- Figur 4:: eine Querschnittdarstellung eines Ausführungsbeispiels einer erfindungsgemäßen Vorrichtung und
- Figur 5:: eine Querschnittdarstellung eines weiteren Ausführungsbeispiels einer erfindungsgemäßen Vorrichtung.

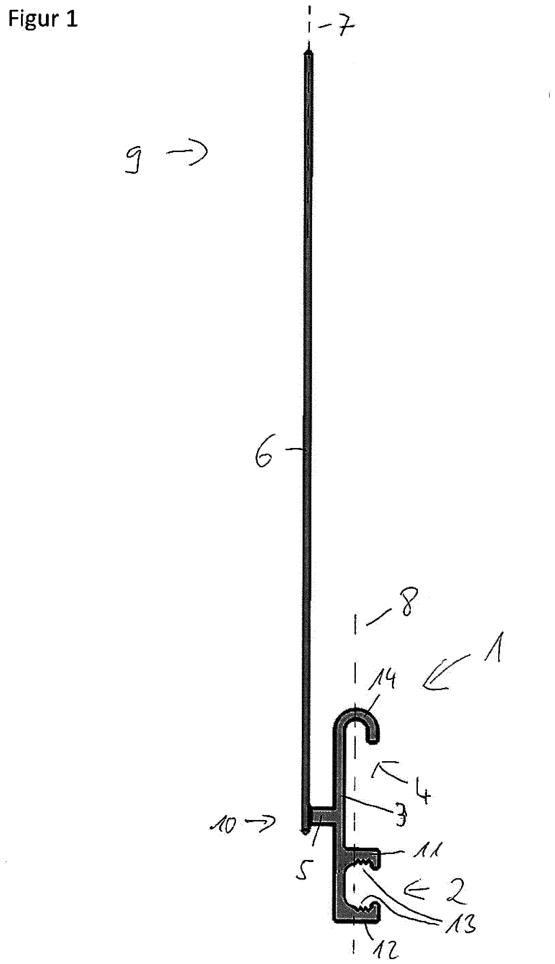

In der Figur 1 ist eine erfindungsgemäße Vorrichtung, welche als Vogelstab ausgebildet ist, in einer Draufsicht dargestellt. Die erfindungsgemäße Vorrichtung weist dabei eine Klemmeinrichtung 1 auf, welche aus einem ersten Klemmelement 2 und einem zweiten Klemmelement 4 besteht, welche über einen Steg 3 miteinander verbunden sind. Das Klemmelement 2 weist dabei zwei Arme 11 und 12 auf, welche an zueinander gegenüberliegenden Seiten mit einer Mehrzahl von Zähnen 13 versehen ist. Zwischen diesen Armen 11 und 12 dieses Klemmelementes 2 kann ein Terminaltrieb eines Baumes eingeklemmt werden, wobei die Arme 11 und 12 mit ihren Zähnen 13 an dem Trieb angreifen und somit ein sicheres Fixieren beziehungsweise Positionieren der Klemmeinrichtung 1 auf dem Trieb dauerhaft gewährleisten. Nachdem die Klemmeinrichtung 1 mit dem Klemmelement 2 an dem Trieb angeordnet ist, wird der Steg 3 nunmehr so gebogen, dass auch das Klemmelement 4 an dem Trieb angeordnet werden kann. Dazu weist das Klemmelement 4 einen Bogen 14 auf, der den Trieb unter Aufbau einer Klemmwirkung umgreift. Nachdem das Klemmelement 4 mit seinem Bogen 14 den Trieb umgriffen hat, ist die Klemmeinrichtung 1 sicher und dauerhaft an dem Trieb fixiert.

In der Mitte der Längserstreckung der Klemmeinrichtung 1 ist nunmehr an dem Steg 3 ein Halteelement 5 angeordnet. An diesem Halteelement 5 kann die erfindungsgemäße Vorrichtung in einfacher Weise gegriffen und auch gehandhabt werden. An dem Halteelement 5 ist zudem nunmehr ein Stab 6 angeordnet. Dabei ist der Stab 6 mit seinem einen Ende 10 direkt an dem Halteelement 5 angeordnet, während das andere Ende 9 des Stabes 6 die Klemmeinrichtung 1 beziehungsweise das Klemmelement 4 deutlich überragt. Dabei ist die Längsachse 7 des Stabes 6 parallel zu der Längsachse 8 der Klemmeinrichtung 1 orientiert. Hierdurch ist gewährleistet, dass auch eine Längsachse des Triebes, an dem die erfindungsgemäße Vorrichtung angeordnet werden soll, parallel zur Längsachse 7 des Stabes 6 angeordnet ist. Hierdurch kann der Trieb entlang des Stabes 6 sicher und gleichmäßig austreiben, ohne dass Vögel die Möglichkeit haben, sich auf diesen Trieb zu setzen. Der Trieb ist nämlich durch den Stab 6 vor einem derartigen Daraufsetzen von Vögeln geschützt. Das Halteelement 5 ist dabei derart am Steg 3 angeordnet, dass es bei einer Anordnung der der Vorrichtung an einem Trieb im Maximum der Biegung des Steges 3 positioniert ist.

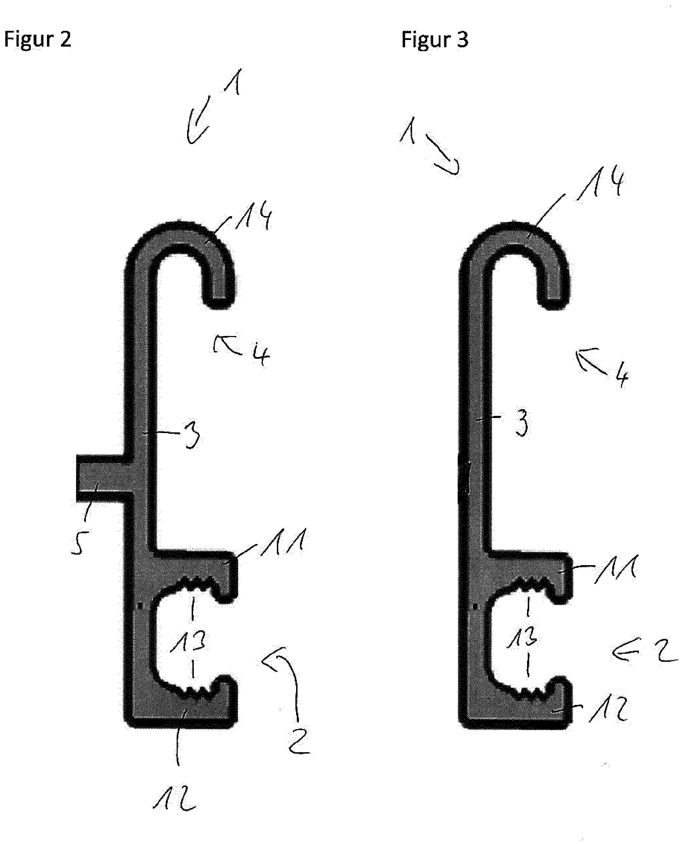

In den Figuren 2 und 3 sind nunmehr erfindungsgemäße Vorrichtungen ohne einen Stab 6 dargestellt. Dabei sind sie im Wesentlichen identisch zu der Klemmeinrichtung 1 des Ausführungsbeispiels gemäß der Figur 1. Sie unterscheiden sich nur dadurch, dass bei der Klemmeinrichtung 1 der Figur 2 an dem Steg 3 ein Halteelement 5 angeordnet ist, während an dem Steg 3 des Ausführungsbeispiels der Figur 3 ein derartiges Halteelement nicht vorhanden ist. Erfindungsgemäße Vorrichtungen der Figuren 2 und 3 werden in der Regel als Zweigformer im Obstbau angewendet. Dazu wird die Klemmeinrichtung 1 mit ihrem ersten Klemmelement 2 an dem Stamm des Obstbaumes eingeklemmt und mit dem weiteren Klemmelement 4 ein einjähriger ausgewachsener und fruchtbarer, jedoch noch nicht verhärteter Trieb heruntergebogen. Hierdurch wird die Triebstellung positiv verändert, wodurch frühere und höhere Ernteerträge zu erwarten sind. Auch in den Ausführungsbeispielen der Figuren 2 und 3 weist das Klemmelement 2 Arme 11 und 12 auf, die mit Zähnen 13 versehen sind. Diese Zähne dienen in diesem Fall dazu, dass die Klemmeinrichtung an einem Stamm eines Obstbaumes in sicherer Weise dauerhaft und unverschiebbar fixiert werden kann. Mithilfe des Bogens 14 des Klemmelements 4 der Klemmeinrichtung 1 wird der einjährige Trieb dann heruntergebogen und durch den Zweigformer in dieser Position gehalten, sodass sich dass weitere Wachstum des Zweiges in horizontaler Richtung fortsetzt.

Grundsätzlich ist es dabei möglich, dass erfindungsgemäße Vorrichtungen mit die Klemmelemente 2 und 4 verbindenden Stegen 3 versehen sind, die unterschiedliche Längen aufweisen, um verschiedene Biegungen zu ermöglichen und unterschiedlich Zweige formen zu können.

Der Steg 3 in den Figuren 2 und 3 ist dabei nur beispielhaft dargestellt und soll in keinster Weise maßstabsgetreu verstanden werden.

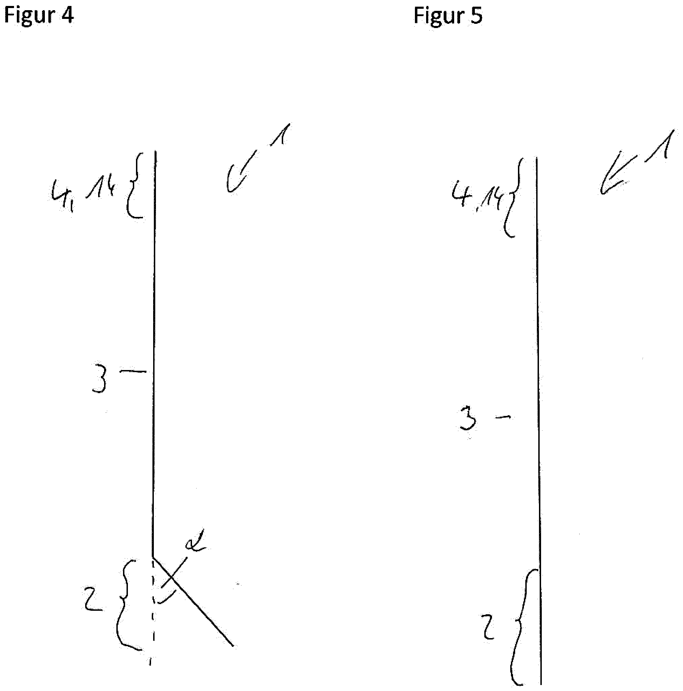

In den Figuren 4 und 5 sind nunmehr erfindungsgemäße Vorrichtungen, welche ebenfalls als Zweigformer genutzt werden können in einer Querschnittdarstellung gezeigt. Dabei ist in dem Ausführungsbeispiel der Figur 4 das Klemmelement 2 der Klemmeinrichtung 1 gegenüber dem Steg 3 und dem Klemmelement 4 um einen Winkel (∝) , der vorzugsweise zwischen 15° und 45° liegt, abgewinkelt. Durch eine derartige Abwinklung wird eine erfindungsgemäße Vorrichtung zur Verfügung gestellt, mit dem eine Haltekraft an einem heruntergebogenen Ast aufgebaut werden kann, wobei Klemmeinrichtungen dabei mit ihrem weiteren Klemmelement 4 in unterschiedlicher Entfernung vom Stamm weg an dem zu herunterbiegenden Ast angeordnet werden können, wobei durch den Winkel (∝) ein sicherer Sitz des Klemmelementes 2 auf dem Stamm des Obstbaumes gewährleistet werden kann als bei Zweigformer, die ein um einen solchen Winkel abgewinkeltes Klemmelement 2 nicht aufweisen.

Ein Ausführungsbeispiel eines derartigen Zweigformers ohne Abwinklung des Klemmelementes 2 gegenüber dem Steg 3 und dem Klemmelement 4 ist in der Figur 5 gezeigt.

In beiden Ausführungsbeispielen sowohl der Figur 4 und der Figur 5 ist dabei das Klemmelement 4 wieder mit einem Bogen 14 versehen, mit welchem der zu herunterbiegende Ast gegriffen werden soll.

### Bezugszeichenliste

- 1: Klemmeinrichtung
- 2: Klemmelement
- 3: Steg
- 4: Klemmelement
- 5: Halteelement
- 6: Stab
- 7: Längsachse
- 8: Längsachse
- 9: Ende
- 10: Ende
- 11: Arm
- 12: Arm
- 13: Zähne
- 14: Bogen (∝) Winkel

## Patentansprüche

1. Vorrichtung zur Wachstumshilfe und zum Schutz einzelner Triebe von Bäumen, welche eine Klemmeinrichtung (1) aufweist, mit welcher die Vorrichtung an einem Baum befestigbar ist, **dadurch gekennzeichnet, dass** die Klemmeinrichtung (1) ein erstes Klemmelement (2) und ein damit über einen elastischen biegbaren Steg (3) verbundenes zweites Klemmelement (4) aufweist, wobei die beiden Klemmelemente (2, 4) an gegenüberliegenden Enden des Steges (3) angeordnet sind und das erste Klemmelement (2) zwei Arme (11, 12) aufweist, die dazu ausgebildet sind, an einen Trieb eines Baumes an gegenüberliegenden Seiten des Triebes unter Aufbau einer Klemmwirkung anzugreifen sowie das zweite Klemmelement (4) mit einem Bogen (14) versehen ist, mit welchem ein durch das andere Klemmelement (2) der Klemmeinrichtung eingespannter Trieb eines Baumes umgreifbar ist.

2. Vorrichtung nach Anspruch 1, **dadurch gekennzeichnet, dass** sie aus einem witterungsbeständigen Kunststoff besteht.

3. Vorrichtung nach Anspruch 2, **dadurch gekennzeichnet, dass** sie aus einem thermoplastischen Kunststoff besteht.

4. Vorrichtung nach Anspruch 2 oder 3, **dadurch gekennzeichnet, dass** sie aus Polyoxymethylen besteht.

5. Vorrichtung nach einem der vorhergehenden Ansprüche, **dadurch gekennzeichnet, dass** an dem Steg (3) ein Halteelement (5) angeordnet ist.

6. Vorrichtung nach Anspruch 5, **dadurch gekennzeichnet, dass** das Halteelement (5) derart an dem Steg (3) angeordnet ist, dass es sich in der Mitte der Längserstreckung der Klemmeinrichtung (1) befindet.

7. Vorrichtung nach Anspruch 5 oder 6, **dadurch gekennzeichnet, dass** an dem Halteelement (5) ein Stab (6) angeordnet ist, dessen Längsachse (7) parallel zur Längsachse (8) der Klemmeinrichtung (1) verläuft.

8. Vorrichtung nach Anspruch 7, **dadurch gekennzeichnet, dass** sich der Stab (6) in seiner Längserstreckung mit seinem einen Ende (9) über eines der Klemmelemente (2, 4) der Klemmeinrichtung (1) erstreckt.

9. Vorrichtung nach Anspruch 7 oder 8, **dadurch gekennzeichnet, dass** der Stab (6) mit seinem anderen Ende (10) an dem Halteelement (5) angeordnet ist.

10. Vorrichtung nach einem der vorhergehenden Ansprüche, **dadurch gekennzeichnet, dass** die Arme (11, 12) mit einer Mehrzahl von Zähnen (13) versehen sind.

11. Vorrichtung nach einem der Ansprüche 7 bis 9, oder nach Anspruch 10, wenn dieser von einem der Ansprüche 7 bis 9 abhängig ist, **dadurch gekennzeichnet, dass** ein Führungselement für einen Trieb eines Baumes vorgesehen ist, welches an dem Stab (6) angeordnet ist.

12. Vorrichtung nach Anspruch 11, **dadurch gekennzeichnet, dass** das Führungselement lösbar an dem Stab (6) angeordnet ist.

13. Vorrichtung nach einem der vorhergehenden Ansprüche, **dadurch gekennzeichnet, dass** das eine Klemmelement (2, 4) der Klemmeinrichtung (1) gegenüber dem anderen Klemmelement (4, 2) und dem Steg (3) um einem Winkel (∝) abgewinkelt ist, wobei dieser Winkel (∝) zwischen 15° und 45° beträgt.

## Claims

1. Device for growth assistance and for protecting individual shoots on trees, which device has a clamping means (1) with which the device is fastenable to a tree, **characterized in that** the clamping means (1) has a first clamping element (2) and a second clamping element (4) which is connected thereto via an elastic flexible web (3), wherein the two clamping elements (2, 4) are arranged at opposite ends of the web (3), and the first clamping element (2) has two arms (11, 12) which are designed to act on a shoot on a tree on opposite sides of the shoot with a clamping action being realized, and the second clamping element (4) is provided with a bow (14) with which a shoot on a tree clamped by the other clamping element (2) of the clamping means can be encompassed.

2. Device according to Claim 1, **characterized in that** it is composed of a weather-resistant plastic.

3. Device according to Claim 2, **characterized in that** it is composed of a thermoplastic.

4. Device according to Claim 2 or 3, **characterized in that** it is composed of polyoxymethylene.

5. Device according to one of the preceding claims, **characterized in that** a holding element (5) is arranged on the web (3).

6. Device according to Claim 5, **characterized in that** the holding element (5) is arranged on the web (3) in such a manner that it is located in the centre of the longitudinal extent of the clamping means (1).

7. Device according to Claim 5 or 6, **characterized in that** a rod (6) is arranged on the holding element (5), the longitudinal axis (7) of which rod runs parallel to the longitudinal axis (8) of the clamping means (1).

8. Device according to Claim 7, **characterized in that** the rod (6) extends at its one end (9) in its longitudinal extent over one of the clamping elements (2, 4) of the clamping means (1).

9. Device according to Claim 7 or 8, **characterized in that** the rod (6) is arranged at its other end (10) on the holding element (5).

10. Device according to one of the preceding claims, **characterized in that** the arms (11, 12) are provided with a plurality of teeth (13).

11. Device according to one of Claims 7 to 9, or according to Claim 10, if the latter is dependent on one of Claims 7 to 9, **characterized in that** a guide element for a shoot on a tree is provided, said guide element being arranged on the rod (6).

12. Device according to Claim 11, **characterized in that** the guide element is arranged releasably on the rod (6).

13. Device according to one of the preceding claims, **characterized in that** the one clamping element (2, 4) of the clamping means (1) is angled by an angle (a) in relation to the other clamping element (4, 2) and the web (3), wherein said angle (a) is between 15° and 45°.

## Revendications

1. Dispositif d'aide à la croissance et de protection de pousses individuelles d'arbres, qui présente un appareil de serrage (1), avec lequel le dispositif peut être fixé à un arbre, **caractérisé en ce que** l'appareil de serrage (1) présente un premier élément de serrage (2) et un deuxième élément de serrage (4) relié à celui-ci par l'intermédiaire d'une traverse élastique flexible (3), les deux éléments de serrage (2, 4) étant agencés à des extrémités opposées de la traverse (3), et le premier élément de serrage (2) présentant deux bras (11, 12), qui sont configurés pour s'engager avec une pousse d'un arbre sur des côtés opposés de la pousse en créant une action de serrage, et le deuxième élément de serrage (4) étant muni d'un arc (14), avec lequel une pousse d'un arbre serrée par l'autre élément de serrage (2) de l'appareil de serrage peut être entourée.

2. Dispositif selon la revendication 1, **caractérisé en ce qu'**il est constitué d'une matière plastique résistante aux intempéries.

3. Dispositif selon la revendication 2, **caractérisé en ce qu'**il est constitué d'une matière plastique thermoplastique.

4. Dispositif selon la revendication 2 ou 3, **caractérisé en ce qu'**il est constitué de polyoxyméthylène.

5. Dispositif selon l'une quelconque des revendications précédentes, **caractérisé en ce qu'**un élément de maintien (5) est agencé sur la traverse (3).

6. Dispositif selon la revendication 5, **caractérisé en ce que** l'élément de maintien (5) est agencé sur la traverse de telle sorte qu'il se trouve au milieu de l'extension longitudinale de l'appareil de serrage (1).

7. Dispositif selon la revendication 5 ou 6, **caractérisé en ce qu'**une barre (6) est agencée sur l'élément de maintien (5), dont l'axe longitudinal (7) s'étend parallèlement à l'axe longitudinal (8) de l'appareil de serrage (1).

8. Dispositif selon la revendication 7, **caractérisé en ce que** la barre (6) s'étend dans son extension longitudinale avec une de ses extrémités (9) au-dessus d'un des éléments de serrage (2, 4) de l'appareil de serrage (1).

9. Dispositif selon la revendication 7 ou 8, **caractérisé en ce que** la barre (6) est agencée avec son autre extrémité (10) sur l'élément de maintien (5).

10. Dispositif selon l'une quelconque des revendications précédentes, **caractérisé en ce que** les bras (11, 12) sont munis d'une pluralité de dents (13).

11. Dispositif selon l'une quelconque des revendications 7 à 9, ou selon la revendication 10 lorsque celle-ci dépend de l'une quelconque des revendications 7 à 9, **caractérisé en ce qu'**un élément de guidage pour une pousse d'un arbre est prévu, qui est agencé sur la barre (6).

12. Dispositif selon la revendication 11, **caractérisé en ce que** l'élément de guidage est agencé de manière amovible sur la barre (6).

13. Dispositif selon l'une quelconque des revendications précédentes, **caractérisé en ce qu'**un des éléments de serrage (2, 4) de l'appareil de serrage (1) est incliné d'un angle (a) par rapport à l'autre élément de serrage (4, 2) et à la barre (3), cet angle (a) étant compris entre 15° et 45°.
